# EUROPEAN PATENT APPLICATION

(11) **EP 4 549 347 A1**
(43) Date of publication of application: **07.05.2025**
(21) Application number: 23206930.2
(22) Date of filing: 31.10.2023
(51) Int. Cl.: B65G 11/02, B65G 11/20, B65G 13/00, B65G 13/075, F03G 7/00, H02J 15/00, B65G 43/00

(54) **CONVEYOR SYSTEM WITH A DEVICE FOR GENERATING ELECTRICITY**

(71) Applicant: Deutsche Post AG, 53113 Bonn (DE)
(72) Inventor: Danesino, Alberto, 27100 Pavia (PV) (IT)
(74) Representative: Michalski Hüttermann & Partner Patentanwälte mbB

(57) **Abstract**

The invention relates to a conveyor system (1) with a chute (2) and a device for generating electricity (3), wherein
the chute (2) comprises a slide surface (4) which is configured to transport a piece good (5) by sliding down from a starting point (A) to an end point (B) arranged lower in the horizontal direction than the starting point (A), and
the device for generating electricity (3) comprises at least one rotatable drive roll (6) arranged in a plane of the slide surface (4) and an electrical generator (7) comprising a flywheel (8) connectable with the at least one rotatable drive roll (6), wherein
in an active state the at least one drive roll (6) is connected with the flywheel (8) and
in an inactive state the at least one drive roll (6) is disconnected from the flywheel (8).

In this way a means of converting the kinetic energy of piece good sliding down a chute into electrical energy for efficient use is provided.

## Description

### Technical Field

The invention relates to a conveyor system with a chute and a device for generating electricity, wherein the chute comprises a slide surface which is configured to transport a piece good by sliding down from a starting point to an end point arranged in the horizontal direction lower than the starting point.

### Background Art

Conveyor systems are regularly used as conveying equipment for the gentle transport or forwarding of piece good in logistics, warehouses, or factories. If a difference in height is to be overcome during transport or forwarding, chutes are used over which the piece good slides down from a higher starting point to a lower end point. The focus is on the economical, safe, and gentle transport of piece good from incoming goods to outgoing goods.

The chute is a drive-free conveying element that is used for space-saving, vertical transport. The piece good is moved by gravity only. The weight of the piece good is thus converted into kinetic energy with the help of the chute. When it reaches the end of the chute, the piece good bounces and the kinetic energy is abruptly lost.

The devices or methods known from the prior art do not yet allow this kinetic energy to be captured and used in form of electrical energy.

### Summary of the invention

It is an object of the invention to provide a means of converting the kinetic energy of piece goods sliding down a chute into electrical energy for efficient use.

The object is solved by the features of the independent claims. Preferred embodiments are described in the sub claims.

Therefore, according to the invention, a conveyor system with a chute and a device for generating electricity is provided. The chute comprises a slide surface which is configured to transport a piece good by sliding down from a starting point to an end point arranged in the horizontal direction lower than the starting point, and the device for generating electricity comprises at least one rotatable drive roll arranged in a plane of the slide surface and an electrical generator comprising a flywheel connectable with the at least one rotatable drive roll, wherein in an active state the at least one drive roll is connected with the flywheel and in an inactive state the at least one drive roll is disconnected from the flywheel.

In the present context, "chute" is understood as any kind of slope that is suitable for piece goods to slide down. The slide surface can be especially a flat and/or planar surface. Alternatively, the slide surface can be especially a part of a roller conveyor. In this case the slide surface comprises rolls to transport the piece good.

In the present context, "flywheel" is understood especially as a mechanical device which uses the conservation of angular momentum to store rotational energy; a form of kinetic energy proportional to the product of its moment of inertia and the square of its rotational speed. In particular, assuming the flywheel's moment of inertia is constant, for example a flywheel with fixed mass and second moment of area revolving about some fixed axis, then the stored rotational energy is directly associated with the square of its rotational speed.

In the present context, "electrical generator" is understood especially as a device that converts motion-based power, in particular potential and kinetic energy, into electric power for use in an external circuit.

Therefore, the sustained rotation of the flywheel allows the electrical generator to operate more efficiently and to generate electricity for a longer period of time.

It is thus an essential point of the invention that the drive roll is arranged into the slide surface in the same plane, so that a down sliding piece good slides over the drive roll. In the active state the drive roll in connected with the flywheel that is connected with the electrical generator so that the down sliding piece good causes to drive roll to rotate. The rotating drive roll drives the flywheel which is connected with the generator that generates electricity by the movement of the flywheel. It is further an essential point of the invention that in the inactive state the flywheel and the drive roll are disconnected from each other so that the flywheel can continue to rotate freely without a stationary drive roll that slows the flywheel.

According to a preferred embodiment of the invention the conveyor system further comprises a monitoring unit configured to detect a piece good sliding down the slide surface. The monitoring unit especially comprises a camera and/or a motion sensor and/or a weight sensor. With detection of a piece good sliding down the chute the conveyor system can be switched from the inactive state to the active state, so that the drive roll and the flywheel can be prepared for an arriving piece good. As soon as the piece good has passed the drive roll, the conveyor system can be switched into inactive mode so that the flywheel can continue to rotate without a coupling with the drive roll. Alternatively, the conveyor system comprises preferably a mechanical mechanism that directly or indirectly connects the drive roll with the flywheel. The mechanism can be for example an interlocking of the drive roll triggered by the weight of the package while sliding down or a free wheel sprocket that separates the rotation of the drive roll and the flywheel.

In materials handling, chutes are in particular divided into spiral chutes, transfer chutes, bin chutes, buffer end points, small sort end points, and/or gravity roller chutes. The drive roller can be integrated in particular in any type of chute. According to a preferred embodiment of the invention the slide surface comprises a plurality of rolls. The plurality of rolls forms a gravity roller conveyor that is used as a whole chute for horizontal transport of piece good under a slight incline. Also, the gravity roller conveyor can especially be used in addition to conventional chutes and end points as feeding or discharging elements. At the end of a transport line, they can also serve as a buffer line. Preferably, some of the plurality of rolls can be combined to build a plurality of drive rolls. The more rolls are coupled to the flywheel as drive rolls, the more kinetic energy can drive the flywheel and can consequently be converted into electrical energy. The efficiency of the device for generating electricity can thus be increased overall.

According to a preferred embodiment of the invention, the electrical generator comprises a dynamo or an alternator.

A dynamo is an electrical generator that creates direct current using a commutator. The electric dynamo uses rotating coils of wire and magnetic fields to convert mechanical rotation into a pulsing direct electric current through Faraday's law of induction. A dynamo machine consists of a stationary structure, called the stator, which provides a constant magnetic field, and a set of rotating windings called the armature which turn within that field. Due to Faraday's law of induction, the motion of the wire within the magnetic field creates an electromotive force, which pushes on the electrons in the metal, creating an electric current in the wire. On small machines, the constant magnetic field may be provided by one or more permanent magnets; larger machines have the constant magnetic field provided by one or more electromagnets, which are usually called field coils.

An alternator is an electrical generator that converts mechanical energy to electrical energy in the form of alternating current. For reasons of cost and simplicity, alternators especially use a rotating magnetic field with a stationary armature. Alternatively, a linear alternator or a rotating armature with a stationary magnetic field is used. A conductor moving relative to a magnetic field develops an electromotive force in it. This electromotive force reverses its polarity when it moves under magnetic poles of opposite polarity. Typically, a rotating magnet, called the rotor turns within a stationary set of conductors wound in coils on an iron core, called the stator. The field cuts across the conductors, generating an induced electromotive force, as the mechanical input causes the rotor to turn.

According to a preferred embodiment of the invention the flywheel is arranged in a plane different from the plane of the slide surface. In particular, the flywheel is arranged in horizontal direction under the slide surface and can be easily connected with the drive roll by lifting the flywheel or a connection element up. According to a preferred embodiment of the invention the flywheel and the at least one drive roll are connectable via a movable gearing system, especially a movable spur gearing system or a movable ring gearing system. The spur gearing is a type of gearbox with spur gears on parallel shafts. Preferably, the motion between drive roll and gearbox is performed by a belt transmission or a gear. The motion between gearbox and flywheel is performed by gear. The simplest design is the single-stage spur gear unit with two shafts, on each of which a gear wheel is located. Multi-stage gears can be formed by adding more gears and intermediate shafts. Their advantages consist in their relatively simple design, since few moving parts are used, and the externally toothed spur gears are easy to manufacture. Ring gearing systems, for example in planetary gears or worm or bevel gears, comprise wheels rotating on a revolving axis that orbit a central wheel similar to planets orbiting the sun. Ring gearing systems are characterized by a compact design with simultaneous high efficiency due to the transmission of several torques simultaneously. The spur gearing system or the ring gearing system can be moved, especially lifted up, so that a connection between the gearing system and the drive roll can be built. Once the gearing system and the drive roll are in touch with each other, the rotation of the drive roll drives the gearing system that drives the flywheel.

According to a preferred embodiment of the invention, the conveyor system further comprises a control unit for controlling the flywheel, wherein a rotation speed of the at least one rotatable drive roll is controllable via the flywheel in the active state. In addition to the energy generation, the speed and/or positioning of the piece good sliding down the chute can also be influenced by the at least one drive roll respectively by the flywheel. In particular, the control unit connects the drive roll with the flywheel especially in such a way that the piece good is slowed down and/or desired movement patterns and/or directions of movement are achieved.

In particular, the control unit comprises a programmable microcontroller, for example an Arduino. "Arduino" is an Italian open-source hardware and software company, project, and user community that designs and manufactures single-board microcontrollers and microcontroller kits for building digital devices. Its hardware products are licensed under a CC BY-SA license, while the software is licensed under the GNU Lesser General Public License (LGPL) or the GNU General Public License (GPL), permitting the manufacture of Arduino boards and software distribution by anyone. Arduino board designs use a variety of microprocessors and controllers. The boards are equipped with sets of digital and analog input/output (I/O) pins that may be interfaced to various expansion boards ('shields') or breadboards (for prototyping) and other circuits. The boards feature serial communications interfaces, including Universal Serial Bus (USB) on some models, which are also used for loading programs. The microcontrollers can be programmed using the C and C++ programming languages, using a standard API which is also known as the Arduino Programming Language, inspired by the Processing language, and used with a modified version of the Processing IDE. In addition to using traditional compiler toolchains, the Arduino project provides an integrated development environment (IDE) and a command line tool developed in Go.

According to the invention, a method for generating electricity with a conveyor system with a chute and a device for generating electricity, wherein the chute comprises a slide surface which is configured to transport a piece good by sliding down from a starting point to an end point arranged in the horizontal direction lower than the starting point and a monitoring unit configured to detect a piece good sliding down the slide surface, and the device for generating electricity comprises at least one rotatable drive roll arranged in a plane of the slide surface and an electrical generator comprising a flywheel connectable with the at least one rotatable drive roll, wherein in an active state the at least one drive roll is connected with the flywheel and in an inactive state the at least one drive roll is disconnected with the flywheel, is further provided. The method comprises the following steps:
Detecting whether a piece good slides down the slide surface,
if a piece good slides down the slide surface, then connecting the at least one drive roll with the flywheel and
if no piece good slides down the slide surface, then disconnecting the at least one drive roll from the flywheel.

In this context, "detecting" can be understood as an active measurement, for example by camera or sensor, or as a passive recognizing, for example because a mechanism gets activated because of the piece good sliding down.

Therefore, in this context, "connecting" and "disconnecting" can be understood as an active connecting or disconnecting, for example by an electrical mechanism, or as being passively connected or disconnected, for example by a mechanical mechanism.

It is thus an essential point of the invention that the drive roll is connected with the flywheel only if a piece good slides down the chute respectively the slide surface. The down sliding piece good is crucial for the generation of electricity. But if no piece good slides down the slide surface, a connection between the not rotating drive roll and the flywheel is counterproductive, because a stationary drive roll slows down the flywheel. Therefore, the flywheel is disconnected when not in use and/or between two down sliding piece goods, so that the flywheel can continue to rotate without moving the drive roll.

According to a preferred embodiment of the invention the method comprises further with the following method steps:
controlling a rotation speed of the at least one drive roll via the flywheel.

In addition to the energy generation, the speed and/or positioning of the piece good sliding down the chute can be controlled by the at least one drive roll connected the flywheel. The piece good can be slowed down and/or can be moved in a desired direction.

According to the invention the conveyor system described above is used in logistics for generating electricity with a piece good sliding down a chute.

### Brief description of the drawings

In the following, the invention is further explained in detail by means of a preferred embodiments with reference to the drawings.

In the drawings
- Fig. 1: schematically depicts a conveyor system of a preferred embodiment of the invention in a perspective view,
- Fig. 2a: schematically depicts a device for generating energy of a preferred embodiment of the invention in a perspective view,
- Fig. 2b: schematically depicts the device for generating energy shown in Fig. 2a in a frontal view,
- Fig. 3: schematically depicts the course of the method of a preferred embodiment of the inventions in a flow chart.

### Detailed description of the embodiments

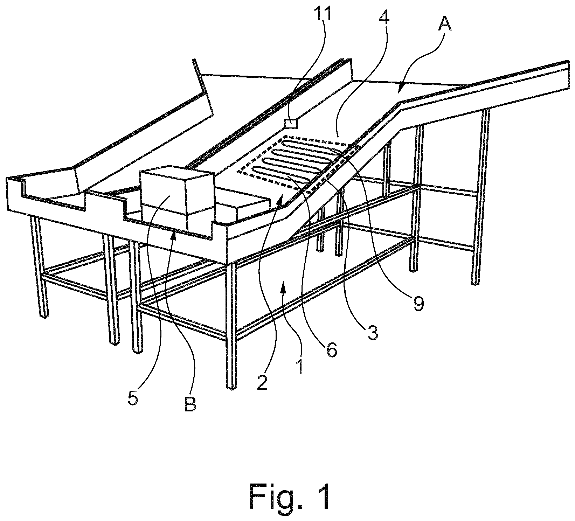

Fig. 1 shows a conveyor system 1 of a preferred embodiment of the invention in a perspective view. The conveyor system 1 comprises a chute 2 for sliding down piece good 5 from a starting point A to a lower end point B. The piece good 5 moves because of gravity. The sliding surface 4 of the chute 2 comprises rolls 9. One of the rolls is a drive roll 6 that is connectable with a flywheel (not shown). The whole device for generating electricity 3 is shown in a simplified representation. The cute 2 further comprises a monitoring unit 11 for detecting whether a piece good 5 slides down the chute 2.

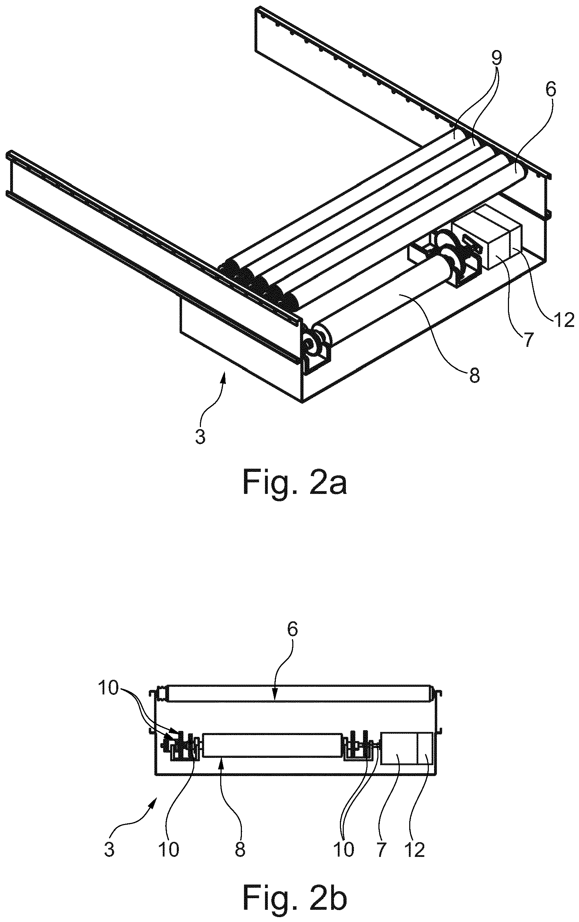

The device for generating electricity 3 is shown in more detail in Fig. 2a and 2b.

Fig. 2a shows the device for generating energy 3 of a preferred embodiment of the invention in a perspective view. The piece good 5 slides over the rolls 9 and also over the drive roll 6. The drive roll 6 is connectable with the flywheel 8 that is arranged under the drive roll 6. Fig 2a shows the inactive state. The drive roll 6 and the flywheel 8 are disconnected. For generating electricity, the flywheel 8 is connected with an electrical generator 7. In the reverse direction, the drive roll 6 can be controlled via the control unit 12, which controls the flywheel, so that a down sliding piece good 5 can be slowed down or can be moved in a specific direction.

Fig. 2b shows the device for generating electricity 3 in a frontal view. It is shown that the flywheel 8 with its gearing systems 10 can be easily connected with the drive roll 6 by lifting the gearing systems 10 up so that the gearing systems 10 that drive the flywheel touch the drive roll 6. If a piece good 5 slides down the sliding surface 4 the drive roll 6 will rotate and drive the gearing systems 10 which drive the flywheel 8. The flywheel 8 is designed to rotate with high efficiency and drives the electrical generator 7 to produce electric energy. The kinetic energy of the down sliding piece good 5 can thus be transformed into electric energy.

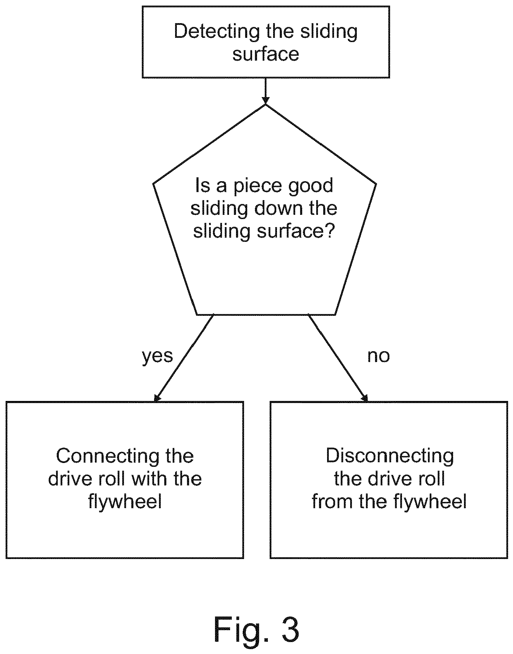

Fig. 3 shows the method of producing electricity in a flow chart. In a first step the sliding surface is monitored. If a down sliding piece good 5 is detected or expected because of process data, the drive roll will be connected with the flywheel so that the rotating drive roll can drive the flywheel. The device for generating electricity 3 is then in active state. If no down sliding piece good 5 is detected or expected, for example between two down sliding piece goods 5, the drive roll 6 will be disconnected from the flywheel 8. The device for generating electricity 3 is then in inactive state and the flywheel 8 can freely rotate without being slowed down by the stationary drive roll 6. In this way the flywheel 8 is only connected with the drive roll in situations in which the drive roll will be actually driven so that the flywheel 8 can rotate and perform with an increased efficiency.

### Reference symbol list

- 1: Conveyor system
- 2: chute
- 3: device for generating electricity
- 4: slide surface
- 5: piece good
- 6: drive roll
- 7: electrical generator
- 8: flywheel
- 9: roll
- 10: gearing system
- 11: monitoring unit
- 12: control unit
- A: starting point
- B: end point

## Claims

1. Conveyor system (1) with a chute (2) and a device for generating electricity (3), wherein
the chute (2) comprises a slide surface (4) which is configured to transport a piece good (5) by sliding down from a starting point (A) to an end point (B) arranged in the horizontal direction lower than the starting point (A), and
the device for generating electricity (3) comprises at least one rotatable drive roll (6) arranged in a plane of the slide surface (4) and an electrical generator (7) comprising a flywheel (8) connectable with the at least one rotatable drive roll (6), wherein
in an active state the at least one drive roll (6) is connected with the flywheel (8) and
in an inactive state the at least one drive roll (6) is disconnected from the flywheel (8).

2. Conveyor system (1) of claim 1, further comprising a monitoring unit (11) configured to detect a piece good (5) sliding down the slide surface (4).

3. Conveyor system (1) of claim 1 or 2, wherein the slide surface (4) comprises a plurality of rolls (9).

4. Conveyor system (1) of one of the previous claims, wherein the electrical generator (7) comprises a dynamo or an alternator.

5. Conveyor system (1) of one of the previous claims, wherein the flywheel (8) is arranged in a plane different from the plane of the slide surface (4).

6. Conveyor system (1) of one of the previous claims, wherein the flywheel (8) and the at least one drive roll (6) are connectable via a movable gearing system (10).

7. Conveyor system (1) of one of the previous claims, further comprising a control unit for controlling the flywheel (8), wherein a rotation speed of the at least one rotatable drive roll (6) is controllable via the flywheel (8) in the active state.

8. Method for generating electricity with a conveyor system (1) with a chute (2) and a device for generating electricity (3), wherein
the chute (2) comprises a slide surface (4) which is configured to transport a piece good (5) by sliding down from a starting point (A) to an end point (B) arranged in the horizontal direction lower than the starting point (A) and a monitoring unit (11) configured to detect a piece good (5) sliding down the slide surface (4), and
the device for generating electricity (3) comprises at least one rotatable drive roll (6) arranged in a plane of the slide surface (4) and an electrical generator (7) comprising a flywheel (8) connectable with the at least one rotatable drive roll (6), wherein in an active state the at least one drive roll (6) is connected with the flywheel (8) and in an inactive state the at least one drive roll (6) is disconnected from the flywheel (8), with the following method steps:
Detecting whether a piece good (5) slides down the slide surface (4),
if a piece good (5) slides down the slide surface (4), then connecting the at least one drive roll (6) with the flywheel (8) and
if no piece good (5) slides down the slide surface (4), then disconnecting the at least one drive roll (6) from the flywheel (8).

9. Method of claim 8, further with the following method step:
controlling a rotation speed of the at least one drive roll (6) via the flywheel (8).

10. Use of a conveyor system (1) of one of the claims 1 to 7 in logistics for generating electricity with a piece good (5) sliding down a chute (2).
